# EUROPÄISCHE PATENTSCHRIFT

(11) **EP 4 653 222 B1**
(45) Veröffentlichungstag und Bekanntmachung des Hinweises auf die Patenterteilung: **19.08.2026**
(21) Anmeldenummer: 24176963.7
(22) Anmeldetag: 21.05.2024
(51) Int. Cl.: B60K 15/04, B60K 15/035

(54) **TANKVORRICHTUNG MIT DICHTHEITSÜBERWACHUNG**
TANK DEVICE WITH TIGHTNESS MONITORING
DISPOSITIF DE RÉSERVOIR AVEC SURVEILLANCE D'ÉTANCHÉITÉ

(43) Veröffentlichungstag der Anmeldung: 26.11.2025
(73) Patentinhaber: MAGNA Energy Storage Systems GesmbH, 8261 Sinabelkirchen (AT)
(72) Erfinder: BINDER, Michael, 8200 Gleisdorf (AT)
(74) Vertreter: Zangger, Bernd

(56) Entgegenhaltungen:
- DE-A1- 102016 222 498
- DE-A1- 19 501 797
- US-A1- 2002 074 335
- US-A1- 2003 094 455

## Beschreibung

### Gebiet der Erfindung

Die vorliegende Erfindung betrifft eine Tankvorrichtung für ein Kraftfahrzeug.

### Stand der Technik

Tankvorrichtungen werden in Kraftfahrzeugen bekannterweise eingesetzt, um beispielsweise in einem Tank den für den Antrieb des Kraftfahrzeugs nötigen Kraftstoff im Kraftfahrzeug mitzuführen, beispielsweise Benzin oder Diesel für eine Verbrennungsmaschine als Antriebsmotor.

Es sind bereits Tanksysteme bekannt, die eine sogenannte NVLD-Einheit (Natural Vacuum Leak Detection oder Diagnosis) verwenden, um den üblicherweise beim Abkühlen des Kraftstoffs, zum Beispiel bei stehendem Fahrzeug, entstehenden Unterdruck im Tank verwenden, um eine Undichtheit des Tanks, somit ein Leck, zu erkennen.

Beispielsweise offenbart die DE 10 2012 212 109 A1 eine Tankentlüftungsanlage eines mit einer Brennkraftmaschine ausgerüsteten Kraftfahrzeugs, die eine NVLD-Einheit ("Natural Vacuum Leak Detection"-Einheit) mit einer Membran-Ventileinheit umfasst, mit welcher das Tanksystem, das einen über eine im Ansaugtrakt der Brennkraftmaschine mündende Spülleitung spülbaren Zwischenspeicher für aus dem Tank entweichende flüchtige Kohlenwasserstoffe enthält, nach dem Abstellen des Fahrzeugs auf ausreichende Dichtheit überprüft wird, indem eine Bildung von Unterdruck im geeignet gegenüber der Umgebung abgesperrtem Tanksystem überwacht wird, wobei eine die NVLD-Einheit überbrückende oder umgehende Bypassleitung mit darin vorgesehenem Sperrventil zwischen dem Tanksystem und der Umgebung vorgesehen ist, über die bei geöffnetem Sperrventil, welches geeignet angesteuert bei Abstellen des Fahrzeugs geschlossen wird und zumindest bei einem Spülvorgang des Zwischenspeichers geöffnet ist, Umgebungsluft zum Zwischenspeicher gelangen kann.

Wenn ein Tankverschluss beispielsweise nach einer Betankung auf den Einfüllstutzen eines Tanks nur aufgesetzt wird, jedoch nicht oder nicht richtig verschlossen wird, liegt eine fehlerhafte Situation vor, die ebenfalls vom Tanksystem erkannt werden sollte. Jedoch wird ein derart aufgesetzter Tankverschluss von einer NVLD-Einheit oft nicht als Leck erkannt.

Aus der US 2002/074335 A1 ist ein Tankdeckel zum Verschließen der Öffnung eines mit einem Kraftstofftank von Kraftfahrzeugen verbundenen Einfüllstutzens bekannt, der aus einem Verschluss besteht, der in die genannte Öffnung des Einfüllstutzens passt, und einem mit dem Verschluss einstückig ausgebildeten Griff, wobei ein oberer und ein unterer Dichtungsring jeweils einzeln und in einem Abstand zueinander am Verschluss angebracht sind.

Dokument DE 10 2016 222498 A1 offenbart ein Tanksystem für ein Fahrzeug umfassend einen Tank für Kraftstoff und eine in den Tank führende Tankleitung zum Befüllen des Tanks, einen Abdecktopf in dem die Tankleitung zugänglich ist, eine Atmosphärenleitung vom Tank in die Umgebung, und ein Filtergehäuse in der Atmosphärenleitung mit einer Serviceöffnung, wobei in das Filtergehäuse ein Staubfilter einsetzbar ist, und wobei die Serviceöffnung im Abdecktopf zum Austauschen des Staubfilters zugänglich ist. In der Atmosphärenleitung zwischen dem Filtergehäuse und dem Tank kann ein Lecküberwachungssystem, vorzugsweise eine Natural Vacuum Leak Detection, angeordnet sein.

### Zusammenfassung der Erfindung

Es ist eine Aufgabe der Erfindung, eine Tankvorrichtung für ein Kraftfahrzeug anzugeben, die einen lediglich aufgesetzten und nicht verschlossenen Tankverschluss erkennen kann.

Die Lösung der Aufgabe erfolgt durch eine Tankvorrichtung für ein Kraftfahrzeug mit den weiteren Merkmalen gemäß Anspruch 1.

Die Tankvorrichtung umfasst einen Tank mit einem Einfüllstutzen zur Befüllung des Tanks und einen Tankverschluss, der auf den Einfüllstutzen aufgesetzt und am Einfüllstutzen verschlossen werden kann, wobei die Tankvorrichtung eine NVLD-Einheit (Natural Vacuum Leak Detection) umfasst, die dazu eingerichtet ist, eine ungenügende Dichtheit des Tanks durch Überwachung eines Unterdrucks im Tank zu erkennen, wobei der Tank-verschluss ein Dichtelement umfasst, das bei einem am Einfüllstutzen verschlossenen Tankverschluss gegen den Einfüllstutzen abdichtet, wobei der Tankverschluss ein Abstandselement umfasst, das bei einem auf den Einfüllstutzen aufgesetzten und nicht verschlossenen Tankverschluss am Einfüllstutzen anliegt und hierdurch einen Kontakt des Dichtelements mit dem Einfüllstutzen verhindert. Dadurch dass das Dichtelement des nicht verschlossenen Tankverschlusses keinen Kontakt mit dem Einfüllstutzen hat, wird der Tankverschluss durch einen entstehenden Unterdruck im Tank nicht gegen den Einfüllstutzen gesogen und wird die Undichtheit von der NVLD-Einheit erkannt.

Erfindungsgemäß wurde festgestellt, dass der entstehende Unterdruck in einem Tank oft ausreicht, um einen aufgesetzten aber nicht korrekt verschlossenen Tankverschluss gegen den Einfüllstutzen des Tanks zu ziehen, sodass eine NVLD-Einheit einen erwarteten Unterdruck detektiert und keine Undichtheit erkennt.

Erfindungsgemäß wird daher ein Tankverschluss mit zumindest einem Abstandselement, insbesondere zumindest einem Federelement, ausgestattet, das bei einem auf den Einfüllstutzen aufgesetzten und nicht verschlossenen Tankverschluss am Einfüllstutzen anliegt und hierdurch einen Kontakt des Dichtelements mit dem Einfüllstutzen verhindert. Das Abstandselement verhindert vorzugsweise eine weitere axiale Annäherung des Dichtelements an den Einfüllstutzen. Der Tankverschluss wird dann durch einen Unterdruck im Tank nicht gegen den Einfüllstutzen gesogen und die Undichtheit kann von der NVLD-Einheit erkannt werden.

Falls der Tankverschluss am Einfüllstutzen verschlossen wird, wird das zumindest eine Abstandselement durch das Verschließen, insbesondere Verschrauben, unwirksam gemacht, insbesondere die Position des Abstandselements verlagert, so dass bei einem am Einfüllstutzen verschlossenen Tankverschluss das Dichtelement gegen den Einfüllstutzen abdichtet.

Weiterbildungen der Erfindung sind in den abhängigen Ansprüchen, der Beschreibung sowie den beigefügten Zeichnungen angegeben.

Vorzugsweise ist das Abstandselement ein Federelement, gegen dessen Kraft beim Verschließen des Tankverschlusses am Einfüllstutzen das Dichtelement in Kontakt mit dem Einfüllstutzen gebracht wird.

Bevorzugt weist der Tankverschluss und/oder der Einfüllstutzen ein Gewinde auf, sodass der Tankverschluss durch Verschraubung am Einfüllstutzen verschlossen werden kann.

Das Abstandselement, bevorzugt Federelement, kann aus Federstahlblech gebildet sein.

Vorzugsweise umfasst der Tankverschluss mehrere Abstandselemente, bevorzugt Federelemente, die bei aufgesetztem Tankverschluss umfänglich um die Öffnung des Einfüllstutzens am Tankverschluss angeordnet sind, also zumindest zwei Abstandselemente.

Ein einzelnes Abstandselement kann sich beispielsweise in der Umfangsrichtung der Öffnung des Einfüllstutzens zumindest abschnittsweise erstrecken.

Ein Abstandselement kann vom Tankverschluss in Richtung zum Einfüllstutzen hin abstehen.

Ein Abstandselement kann in Bezug auf die Öffnung des Einfüllstutzens eine Krümmung oder Biegung radial nach außen aufweisen, die bei axialer Annäherung des Tankverschlusses in Richtung zum Einfüllstutzen hin an einer Ausformung, insbesondere Schulter, des Einfüllstutzens eine Bewegung des Abstandselements nach radial außen bewirkt.

Das Abstandselement liegt bevorzugt, bei einem auf den Einfüllstutzen aufgesetzten und nicht verschlossenen Tankverschluss, am Einfüllstutzen derart an einer Schulter des Einfüllstutzens an, dass das Abstandselement beim Verschließen des Tankverschlusses in Bezug auf die Öffnung des Einfüllstutzens nach radial außen gedrückt wird, so dass das Dichtelement mit dem Einfüllstutzen in Kontakt gelangt und gegen den Einfüllstutzen abdichtet.

Vorzugsweise ist das Dichtelement eine bei aufgesetztem Tankverschluss um die Öffnung des Einfüllstutzens umlaufende Ringdichtung.

### Kurzbeschreibung der Zeichnungen

Die Erfindung wird im Folgenden beispielhaft unter Bezugnahme auf die Zeichnungen beschrieben.
- Fig. 1: ist eine ausschnittweise Schnittansicht einer Tankvorrichtung für ein Kraftfahrzeug und zeigt die Position eines Bereiches A.
- Fig. 2: ist eine Schnittansicht des Bereiches A gemäß Fig. 1 in einer nicht erfindungsgemäßen Tankvorrichtung bei aufgesetztem und nicht verschlossenem Tankverschluss.
- Fig. 3: ist eine Schnittansicht des Bereiches A gemäß Fig. 1 in einer erfindungsgemäßen Tankvorrichtung bei aufgesetztem und nicht verschlossenem Tankverschluss.
- Fig. 4: ist eine Schnittansicht des Bereiches A gemäß Fig. 1 in der erfindungsgemäßen Tankvorrichtung gemäß Fig. 3 bei verschlossenem Tankverschluss.

### Detaillierte Beschreibung der Erfindung

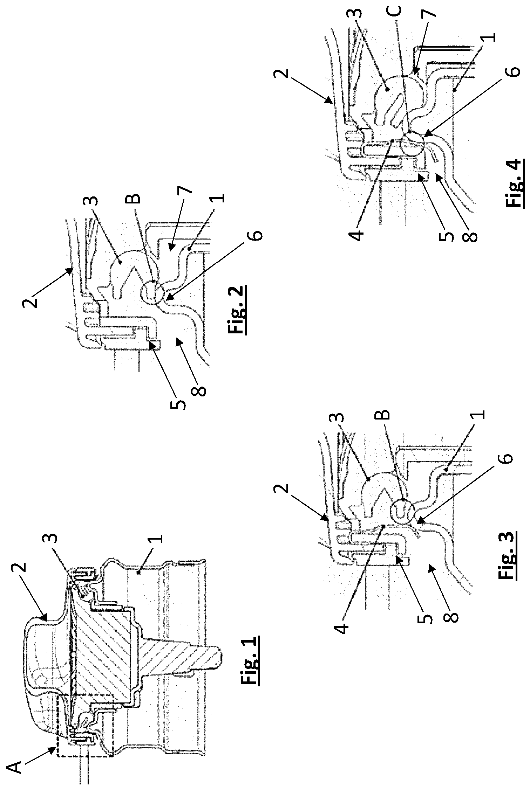

In Fig. 1 ist eine Schnittansicht einer Tankvorrichtung für ein Kraftfahrzeug dargestellt, die den Einfüllstutzen 1 eines sonst nicht weiter dargestellten Tanks zeigt. Der Einfüllstutzen 1 ist durch einen Tankverschluss 2 verschlossen. Zwischen dem Tankverschluss 2 und dem Einfüllstutzen 1 wirkt ein um den Umfang des Einfüllstutzens 1 umlaufendes Dichtelement 3. Der in Fig. 1 als gestricheltes Rechteck eingezeichnete Bereich A ist in den Fig. 2, 3 und 4 im Detail dargestellt.

Dabei zeigt Fig. 2 eine nicht erfindungsgemäße Tankvorrichtung bei aufgesetztem und nicht verschlossenem Tankverschluss 2. Der Tankverschluss 2 umfasst das umlaufende Dichtelement 3. Das Dichtelement 3 liegt in dem eingezeichneten Bereich B auf einer Schulter 6 des Einfüllstutzens 1 auf. Die Tankvorrichtung umfasst kein Abstandselement oder Federelement, das das Aufliegen des Dichtelements 3 auf der Schulter 6 bei nicht verschlossenem Tankverschluss verhindern würde. Bei Auftreten eines Vakuums 7 im Tank, also eines Unterdrucks im Vergleich zum Umgebungsdruck 8, wird daher das Dichtelement 3 nach innen in Richtung zum Einfüllstutzen 1 gesaugt und somit dessen Auflage am Einfüllstutzen 1 weiter verstärkt. Eine - nicht dargestellte - NVLD-Einheit erkennt somit einen erwarteten Unterdruck und somit kein Problem im Tanksystem.

Fig. 3 zeigt im Gegensatz dazu eine erfindungsgemäße Tankvorrichtung bei aufgesetztem und nicht verschlossenem Tankverschluss.

Die Tankvorrichtung umfasst eine NVLD-Einheit (Natural Vacuum Leak Detection), die dazu eingerichtet ist, eine ungenügende Dichtheit des Tanks durch Überwachung eines Unterdrucks im Tank zu erkennen. Der Tankverschluss 2 umfasst ein um die Öffnung eines Einfüllstutzens 1 umlaufendes Dichtelement 3, das bei einem am Einfüllstutzen 1 verschlossenen Tankverschluss 2 gegen den Einfüllstutzen 1 abdichtet.

Der Tankverschluss 2 umfasst erfindungsgemäß ein Abstandselement 4, das bei einem auf den Einfüllstutzen 1 aufgesetzten und nicht verschlossenen Tankverschluss 2 am Einfüllstutzen 1 anliegt und hierdurch einen Kontakt des Dichtelements 3 mit dem Einfüllstutzen 1 verhindert, so dass das Dichtelement 3 durch einen Unterdruck im Tank nicht gegen den Einfüllstutzen 1 gesogen wird und daher nicht gegen den Einfüllstutzen 1 abdichtet. Dies ist in Fig. 3 dargestellt und insbesondere im Bereich B, der die fehlende Auflage des Dichtelements 3 an dem Einfüllstutzen 1, nämlich an der Schulter 6 des Einfüllstutzens 1, zeigt.

Das Abstandselement 4 oder mehre, zum Beispiel zwei Abstandselemente 4, sind radial außerhalb des Dichtelements 3 am Tankverschluss 2 angeordnet.

Das Abstandselement 4 ist ein Federelement, gegen dessen Kraft beim Verschließen des Tankverschlusses 2 am Einfüllstutzen 1 das Dichtelement 3 in Kontakt mit dem Einfüllstutzen 1 gebracht wird. Der verschlossene Zustand der Tankvorrichtung aus Fig. 3 ist in Fig. 4 dargestellt.

Der Tankverschluss 2 und/oder der Einfüllstutzen 1 weist ein Gewinde 5 auf, sodass der Tankverschluss 2 durch Verschraubung am Einfüllstutzen 1 verschlossen werden kann.

Das Abstandselement 4, nämlich Federelement, ist aus Federstahlblech gebildet und steht vom Tankverschluss 2 axial, in Richtung zum Einfüllstutzen 1 hin, ab. Das Abstandselement 4 weist eine Krümmung oder Biegung radial nach außen in Bezug auf die Öffnung des Einfüllstutzens 1 auf, die bei aufgesetztem und nicht verschlossenen Tankverschluss 2 an der Schulter 6 des Einfüllstutzens 1 aufsitzt (Fig. 3) und bei axialer Annäherung des Tankverschlusses 2, in Richtung zum Einfüllstutzen 1 hin, an einer Ausformung, nämlich an der Schulter 6 des Einfüllstutzens 1 eine Bewegung des Abstandselements 4 nach radial außen durchführt. Dadurch dass das Abstandselement 4, beim Verschließen des Tankverschlusses 2 mittels Gewinde 5, gegen seine Federkraft nach außen versetzt wird und von der Schulter 6 des Einfüllstutzens 1 gleitet - im Bereich C der Fig. 3 -, kann das Dichtelement 3 an der Schulter 6 und/oder an anderen Abschnitten des Einfüllstutzens 1 aufliegen und abdichten (Fig. 4).

Somit liegt das Abstandselement 4, bei einem auf den Einfüllstutzen 1 aufgesetzten und nicht verschlossenen Tankverschluss 2 am Einfüllstutzen 1 derart an einer Schulter 6 des Einfüllstutzens 1 an, dass das Abstandselement 4 beim Verschließen des Tankverschlusses 2 in Bezug auf die Öffnung des Einfüllstutzens 1 nach radial außen gedrückt wird, so dass das Dichtelement 3 mit dem Einfüllstutzen 1 in Kontakt gelangt und gegen den Einfüllstutzen 1 abdichtet.

Der Tankverschluss 2 kann mehrere Abstandselemente 4, bevorzugt Federelemente, umfassen, die bei aufgesetztem Tankverschluss 2 umfänglich um die Öffnung des Einfüllstutzens 1 am Tankverschluss 2 angeordnet sind und bei aufgesetztem Tankverschluss 2 am Einfüllstutzen 1 aufsitzen, also zumindest zwei Abstandselemente 4.

Das Dichtelement 3 ist eine bei aufgesetztem Tankverschluss 2 um die Öffnung des Einfüllstutzens 1 umlaufende Ringdichtung. Das Dichtelement 3 kann beispielsweise ein U-förmiges Profil aufweisen.

### Bezugszeichenliste

- 1: Einfüllstutzen
- 2: Tankverschluss
- 3: Dichtelement
- 4: Abstandselement
- 5: Gewinde
- 6: Schulter
- 7: Vakuum
- 8: Umgebungsdruck

- A: Bereich
- B: Bereich
- C: Bereich

## Patentansprüche

1. Tankvorrichtung für ein Kraftfahrzeug, umfassend einen Tank mit einem Einfüllstutzen (1) zur Befüllung des Tanks und einen Tankverschluss (2), der auf den Einfüllstutzen (1) aufgesetzt und am Einfüllstutzen (1) verschlossen werden kann, wobei die Tankvorrichtung eine NVLD-Einheit (Natural Vacuum Leak Detection) umfasst, die dazu eingerichtet ist, eine ungenügende Dichtheit des Tanks durch Überwachung eines Unterdrucks im Tank zu erkennen,
**dadurch gekennzeichnet , dass** der Tankverschluss (2) ein Dichtelement (3) umfasst, das bei einem am Einfüllstutzen (1) verschlossenen Tankverschluss (2) gegen den Einfüllstutzen (1) abdichtet, wobei der Tankverschluss (2) ein Abstandselement (4) umfasst, das bei einem auf den Einfüllstutzen (1) aufgesetzten und nicht verschlossenen Tankverschluss (2) am Einfüllstutzen (1) anliegt und hierdurch einen Kontakt des Dichtelements (3) mit dem Einfüllstutzen (1) verhindert, sodass der Tankverschluss (2) durch einen entstehenden Unterdruck im Tank nicht gegen den Einfüllstutzen (1) gesogen und eine Undichtheit von der NVLD-Einheit erkannt wird.

2. Tankvorrichtung nach Anspruch 1,
**dadurch gekennzeichnet , dass** das Abstandselement (4) ein Federelement ist, gegen dessen Kraft beim Verschließen des Tankverschlusses (2) am Einfüllstutzen (1) das Dichtelement (3) in Kontakt mit dem Einfüllstutzen (1) gebracht wird.

3. Tankvorrichtung nach zumindest einem der vorhergehenden Ansprüche,
**dadurch gekennzeichnet, dass** der Tankverschluss (2) und/oder der Einfüllstutzen (1) ein Gewinde (5) aufweist, sodass der Tankverschluss (2) durch Verschraubung am Einfüllstutzen (1) verschlossen werden kann.

4. Tankvorrichtung nach zumindest einem der vorhergehenden Ansprüche,
**dadurch gekennzeichnet, dass** der Tankverschluss (2) mehrere Abstandselemente (4), bevorzugt Federelemente, umfasst, die bei aufgesetztem Tankverschluss (2) umfänglich um die Öffnung des Einfüllstutzens (1) am Tankverschluss (2) angeordnet sind.

5. Tankvorrichtung nach zumindest einem der vorhergehenden Ansprüche,
**dadurch gekennzeichnet, dass** das Abstandselement (4), bevorzugt Federelement, aus Federstahlblech gebildet ist.

6. Tankvorrichtung nach zumindest einem der vorhergehenden Ansprüche,
**dadurch gekennzeichnet, dass** das Abstandselement (4) vom Tankverschluss (2) in Richtung zum Einfüllstutzen (1) hin absteht und eine Krümmung oder Biegung radial nach außen in Bezug auf die Öffnung des Einfüllstutzens (1) aufweist, die bei axialer Annäherung des Tankverschlusses (2) in Richtung zum Einfüllstutzen (1) hin an einer Ausformung, insbesondere Schulter (6), des Einfüllstutzens (1) eine Bewegung des Abstandselements (4) nach radial außen bewirkt.

7. Tankvorrichtung nach zumindest einem der vorhergehenden Ansprüche,
**dadurch gekennzeichnet, dass** das Abstandselement (4), bei einem auf den Einfüllstutzen (1) aufgesetzten und nicht verschlossenen Tankverschluss (2) am Einfüllstutzen (1) derart an einer Schulter (6) des Einfüllstutzens (1) anliegt, dass das Abstandselement (4) beim Verschließen des Tankverschlusses (2) in Bezug auf die Öffnung des Einfüllstutzens (1) nach radial außen gedrückt wird, so dass das Dichtelement (3) mit dem Einfüllstutzen (1) in Kontakt gelangt und gegen den Einfüllstutzen (1) abdichtet.

8. Tankvorrichtung nach zumindest einem der vorhergehenden Ansprüche,
**dadurch gekennzeichnet, dass** das Dichtelement (3) eine bei aufgesetztem Tankverschluss (2) um die Öffnung des Einfüllstutzens (1) umlaufende Ringdichtung ist.

## Claims

1. Tank apparatus for a motor vehicle comprising a tank having a filling nozzle (1) for filling the tank (1) and a tank closure (2) which can be placed on the filling nozzle (1) and can be closed on the filling nozzle (1), wherein the tank apparatus comprises a NVLD unit (Natural Vacuum Leak Detection) which is configured to identify inadequate leak-tightness of the tank by monitoring a reduced pressure in the tank, **characterized in that** the tank closure (2) comprises a sealing element (3) which, when a tank closure (2) is closed on the filling nozzle (1), seals with respect to the filling nozzle (1), wherein the tank closure (2) comprises a spacing element (4) which, when a tank closure (2) is placed on the filling nozzle (1) and is not closed, bears on the filling nozzle (1) and thereby prevents contact of the sealing element (3) with the filling nozzle (1) so that there is no leak-tightness between the tank closure (2) and filling nozzle (1), so that the tank closure (2) is not drawn against the filling nozzle (1) by means of a reduced pressure being produced in the tank and a leakage is identified by the NVLD unit.

2. Tank apparatus according to claim 1,
**characterized in that** the spacing element (4) is a resilient element, against the force of which, when the tank closure (2) is closed on the filling nozzle (1), the sealing element (3) is brought into contact with the filling nozzle (1).

3. Tank apparatus according to at least one of the preceding claims,
**characterized in that** the tank closure (2) and/or the filling nozzle (1) has a thread (5) so that the tank closure (2) can be closed on the filling nozzle (1) by being screwed.

4. Tank apparatus according to at least one of the preceding claims, **characterized in that** the tank closure (2) comprises a plurality of spacing elements (4), preferably resilient elements, which, when the tank closure (2) has been placed, are arranged circumferentially around the opening of the filling nozzle (1) on the tank closure (2).

5. Tank apparatus according to at least one of the preceding claims, **characterized in that** the spacing element (4), preferably a resilient element, is formed from spring sheet steel.

6. Tank apparatus according to at least one of the preceding claims, **characterized in that** the spacing element (4) protrudes from the tank closure (2) in the direction towards the filling nozzle (1) and has a curvature or bend radially outwards with respect to the opening of the filling nozzle (1), which, when the tank closure (2) axially approaches a formation, in particular shoulder (6), of the filling nozzle (1) in the direction towards the filling nozzle (1), brings about a movement of the spacing element (4) radially outwards.

7. Tank apparatus according to at least one of the preceding claims, **characterized in that** the spacing element (4) bears, when a tank closure (2) is placed on the filling nozzle (1) and is not closed, on the filling nozzle (1) on a shoulder (6) of the filling nozzle (1) in such a manner that the spacing element (4) when the tank closure (2) is closed is pressed radially outwards with respect to the opening of the filling nozzle (1) so that the sealing element (3) comes into contact with the filling nozzle (1) and seals with respect to the filling nozzle (1).

8. Tank apparatus according to at least one of the preceding claims, **characterized in that** the sealing element (3) is an annular seal which, when the tank closure (2) is placed, extends around the opening of the filling nozzle (1).

## Revendications

1. Dispositif de réservoir pour un véhicule à moteur, comprenant un réservoir avec une tubulure de remplissage (1) pour le remplissage du réservoir et une fermeture (2) de réservoir, qui peut être placée sur la tubulure de remplissage (1) et qui peut être fermée sur la tubulure de remplissage (1), le dispositif de réservoir comprenant une unité NVLD (détection de fuite de vide naturel) qui est mise au point pour identifier une étanchéité insuffisante du réservoir en surveillant une dépression dans le réservoir,
**caractérisé en ce que** la fermeture (2) de réservoir comprend un élément d'étanchéité (3) qui, dans le cas d'une fermeture (2) de réservoir fermée sur la tubulure de remplissage (1), assure l'étanchéité vis-à-vis de la tubulure de remplissage (1), la fermeture (2) de réservoir comprenant un élément d'écartement (4), qui, lorsque la fermeture (2) de réservoir est placée sur la tubulure de remplissage (1) et n'est pas fermée, repose sur la tubulure de remplissage (1) et empêche ainsi un contact entre l'élément d'étanchéité (3) et la tubulure de remplissage (1), si bien que la fermeture (2) de réservoir n'est pas aspirée contre la tubulure de remplissage (1) par une dépression qui se produit dans le réservoir et qu'une fuite est identifiée par l'unité NVLD.

2. Dispositif de réservoir selon la revendication 1,
**caractérisé en ce que** l'élément d'écartement (4) est un élément à ressort, contre la force duquel l'élément d'étanchéité (3) est amené en contact avec la tubulure de remplissage (1) lorsque la fermeture (2) de réservoir est fermée sur la tubulure de remplissage (1).

3. Dispositif de réservoir selon au moins l'une des revendications précédentes,
**caractérisé en ce que** la fermeture (2) de réservoir et/ou la tubulure de remplissage (1) comportent un filetage (5), si bien que la fermeture (2) de réservoir peut être fermée par vissage sur la tubulure de remplissage (1).

4. Dispositif de réservoir selon au moins l'une des revendications précédentes,
**caractérisé en ce que** la fermeture (2) de réservoir comprend plusieurs éléments d'écartement (4), de manière préférée des éléments à ressort, qui sont disposés sur la fermeture (2) de réservoir sur le pourtour de l'ouverture de la tubulure de remplissage (1) lorsque la fermeture (2) de réservoir est placée.

5. Dispositif de réservoir selon au moins l'une des revendications précédentes,
**caractérisé en ce que** l'élément d'écartement (4), de manière préférée l'élément à ressort, est formé à partir de tôle d'acier à ressort.

6. Dispositif de réservoir selon au moins l'une des revendications précédentes,
**caractérisé en ce que** l'élément d'écartement (4) fait saillie de la fermeture (2) de réservoir en direction de la tubulure de remplissage (1) et comporte une incurvation ou une courbure radialement vers l'extérieur par rapport à l'ouverture de la tubulure de remplissage (1) qui, lorsque la fermeture (2) de réservoir s'approche axialement en direction de la tubulure de remplissage (1), entraîne sur une protubérance, en particulier l'épaulement (6), de la tubulure de remplissage (1) un déplacement de l'élément d'écartement (4) radialement vers l'extérieur.

7. Dispositif de réservoir selon au moins l'une des revendications précédentes,
**caractérisé en ce que** l'élément d'écartement (4), lorsque la fermeture (2) de réservoir est placée sur la tubulure de remplissage (1) et n'est pas fermée, repose sur la tubulure de remplissage (1) de telle manière sur un épaulement (6) de la tubulure de remplissage (1) que l'élément d'écartement (4) est pressé radialement vers l'extérieur par rapport à l'ouverture de la tubulure de remplissage (1) lors de la fermeture de la fermeture (2) de réservoir, de telle sorte que l'élément d'étanchéité (3) entre en contact avec la tubulure de remplissage (1) et assure l'étanchéité contre la tubulure de remplissage (1).

8. Dispositif de réservoir selon au moins l'une des revendications précédentes,
**caractérisé en ce que** l'élément d'étanchéité (3) est un joint annulaire s'étendant autour de l'ouverture de la tubulure de remplissage (1) lorsque la fermeture (2) de réservoir est montée.
